# EUROPÄISCHE PATENTSCHRIFT

(11) **EP 0 731 302 B1**
(45) Veröffentlichungstag und Bekanntmachung des Hinweises auf die Patenterteilung: **03.12.1997**
(21) Anmeldenummer: 96101861.1
(22) Anmeldetag: 09.02.1996
(51) Int. Cl.: F16J 15/32

(54) **Abstreifer, insbesondere für fluidbetriebene Zylinder-Kolben-Aggregate**
Wiper, in particular for fluid powered piston-cylinder units
Râcleur, en particulier pour ensembles piston-cylindre actionnés par un fluide

(30) Priorität: 20.02.1995 DE 19505717
(43) Veröffentlichungstag der Anmeldung: 11.09.1996
(73) Patentinhaber: Parker Hannifin GmbH, 33659 Bielefeld (DE)
(72) Erfinder: Becker, Markus, D-74343 Sachsenheim (DE)
(74) Vertreter: Wolff, Michael, Dipl.-Phys.

(56) Entgegenhaltungen:
- DE-A- 2 530 097
- DE-U- 8 704 249

## Beschreibung

Die Erfindung betrifft die aus der DE-U-87 04 249 und der DE-A-25 30 097 bekannten Abstreifer gemäß Oberbegriff des Anspruches 1.

Aggregat-Abstreifer dienen dazu, das Eindringen von Schmutzpartikeln und Wasser von außen sowohl an der dynamischen als auch an der statischen Abstreif- bzw. Dichtstelle des Aggregats zu verhindern.
Gegenstand der Erfindung ist ein Abstreifer gemäß Anspruch 1 mit dessen kennzeichnenden Merkmalen, dank deren eine größere radiale Exzentrizität der axial gegeneinander bewegten Bauteile wie Kolben und Zylinder, in dessen Einbauraum der Dichtteil des Abstreifers gelagert ist, möglich ist, ohne daß dabei die dynamische Abstreifwirkung oder die statische Dichtwirkung beeinträchtigt wird. Mit den bekannten Abstreifern der eingangs genannten Art ist dies nur eingeschränkt möglich, wobei im Falle der DE 25 30 097 A1 der W-förmige Verbindungsteil (6) gar nicht druckbeaufschlagbar ist. - Beim erfindungsgemäßen Abstreifer ist der Verbindungsteil druckbeaufschlagbar, ohne die Funktion seines Dichtteiles zu beeinträchtigen und eine axiale Einklemmung desselben zu erfordern.

Ausgestaltungen und Weiterbildungen des erfindungsgemäßen Abstreifers sind in den Ansprüche 2 bis 9 gekennzeichnet.

Im Folgenden ist die Erfindung anhand einer durch die Zeichnung beispielhaft dargestellten Ausführungsform des erfindungsgemäßen Abstreifers im einzelnen erläutert. Gezeigt sind in
- Fig. 1 und 3: das Profil der Ausführungsform, ausgebaut bzw. eingebaut
- Fig. 2: das Profil eines Einbauraumes für diese Ausführungsform

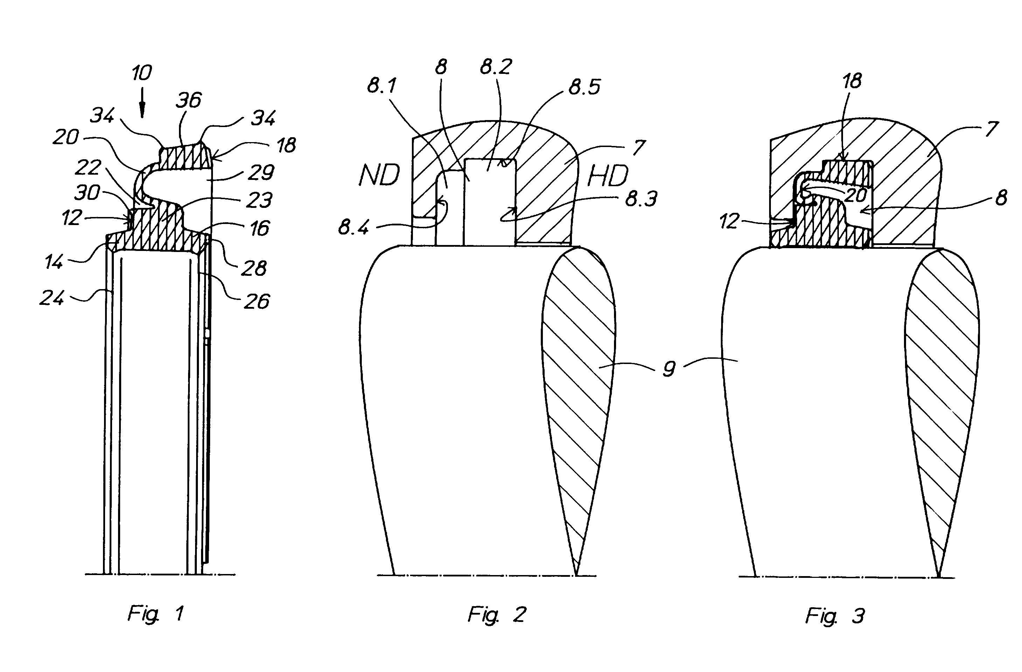

Im gezeigten Ausführungsbeispiel eines erfindungsgemäßen Abstreifers (Fig. 1 ) für ein fluidbetriebenes Zylinder-Kolben-Aggregat (Fig. 2 ) mit einem im Zylinder 7 ausgeformten Einbauraum 8, der aus zwei radial unterschiedlich weiten axialen Abschnitten 8.1 und 8.2 besteht, weist der gezeigte kreisringförmige Doppel-Abstreifer 10 hauptsächlich einen radial inneren, dynamischen Abstreifteil 12 mit zwei weit gespreizten Abstreiflippen 14 und 16; einen radial äußeren, statischen Dichtteil 18 und einen radial mittleren, membranartigen Verbindungsteil 20 auf, der die beiden anderen Teile 12 und 18 zu einer einstückigen Einheit verbindet, die in sich radial beweglich ist.
Der Abstreifteil 12 ist bis auf eine radial äußere, axial vordere keilförmige Eckaussparung 22 eines quadratisch profilierten Kern-Ringes 23 (ein sogenannter Quadring) bezüglich einer mittleren Radialebene angenähert spiegelbildlich profiliert, wobei von den je eine dynamische Abstreifkante 24 bzw. 26 aufweisenden Abstreiflippen 14 und 16 die axial innere (16) an ihrer axialen Stirnseite mit auf den Kreisumfang verteilten, radialen Stützwülsten 28 versehen ist, die mit der hochdruckseitigen Stirnfläche 8.3 (bei HD) des Einbauraumes 8 in Kontakt treten (siehe Fig.3 ) und sowohl für eine Abstützung der Abstreiflippe 16 als auch für den Durchlaß des unter Druck stehenden Mediums in den vom Abstreifer 10 und der Stirnfläche 8.3 begrenzten Hohlraum 29 sorgen. Die Abstreiflippe 16 ist ungefähr 5% bis 25% dicker als die Abstreiflippe 14 und hat einen um ungefähr 0,5% bis 5% kleineren Innendurchmesser, gemessen an der Abstreifkante 26 bzw. 24. - An den Abstreifteil 12 ist auch eine in axialer Bewegungsrichtung einer abzustreifenden Kolbenstange 9 nach vorn vorspringende Hilfsdichtkante 30 angeformt, die mit der niederdruckseitigen Stirnfläche 8.4 (bei ND) des Einbauraumes 8 in axialen Preßkontakt tritt (siehe Fig. 3 3 ). Dazu ist die axiale Strecke von den Stützwülsten 38 bis zur Hilfsdichtkante 30 um deren Vorsprung gegenüber dem Ring 23 größer als die axiale Breite des Einbauraumes 8.
Der Dichtteil 18 weist ein angenähert trapezförmiges Profil mit einem Keilwinkel von ungefähr 5% bis 30% auf und hat eine Schrägstellung gegenüber dem Einbauraum 8 im Winkelbereich von 0° bis ca. 40° zur Symmetrieachse. Beides dient zur Kompensation des montagebedingten Einklappens des Dichtteiles 18 und stellt somit den Kontakt beider Dichtkanten 34 mit der Umfangsfläche 8.5 sicher.
An seinen beiden axialen Enden besitzt der Dichtteil 18 nämlich zwei statische Dichtkanten 34, welche die Dichtfläche 36 axial begrenzen, die sich an die Umfangsfläche 8.5 des axial hinteren Abschnittes 8.2 des Einbauraumes 8 legt.
Der als Membran ausgebildete Verbindungsteil 20 weist ein sehr schmales, angenähert halbkreisförmiges Profil auf und mündet angenähert parallel zur Bewegungsrichtung der Kolbenstange 9 in den Abstreifteil 12 (dort die Eckaussparung 22 bildend) und den Dichtteil 18, wobei seine vom höheren Druck beaufschlagte Innenfläche konkav ist und den Hohlraum 29 axial vorn begrenzt, während seine konvexe Außenfläche die axial vordere Stirnfläche 8.4 des Einbauraumes 8 tangiert. Die Profilkrümmung des Verbindungsteiles 20 ist außerhalb des Einbauraumes 8 am Abstreifteil 12 merklich größer als am Dichtteil 18.
Wesentlich ist, daß die Radialsteifigkeit des Verbindungsteiles 20 wegen der Dünnwandigkeit dieser Membrane erheblich geringer ist als diejenige der beweglich verbundenen Teile 12 und 18, und zwar auch dann, wenn der Doppel-Abstreifer 10 aus homogenem Material einheitlicher Härte besteht.

Die Verbindungsmembrane 20 weist eine Dicke von wenigstens 0,2 mm auf; die Geometrie setzt sich aus wenigstens zwei Kreisringsegmenten unterschiedlicher Radien und/oder Dicken zusammen. Die Einmündung in den Abstreifteil 12 erfolgt in einem Winkelbereich von 0° bis 15° zur Rotations- oder Profilsymmetrieachse radial außen auf der druckabgewandten Seite des Quadringes 23, welcher hierzu außerdem die Aussparung 22 erhält. Die Einmündung in den Dichtteil 18 erfolgt ebenfalls auf der druckabgewandten Seite in einem Winkelbereich von +/- 15° zur einer die beiden Dichtkanten 34 verbindenden gedachten Linie, radial innen an der schmalen Stirnseite des im Längsschnitt keilförmigen Dichtteiles 18. Der Krümmungsradius der Verbindungsmembrane 20 an der Einmündung in den Abstreifteil 12 ist so gewählt, daß im montierten Zustand die Aussparung 22 nahezu ausgefüllt wird; ebenso ist der Krümmungsradius der Verbindungsmembrane 20 an der Einmündung in den Dichtteil 18 so gewählt, daß im montierten Zustand eine weitestgehende Anschmiegung an die Stirnfläche 8.4 erfolgt. Durch geeignete Wahl der Krümmungsradien wird eine Druckbeaufschlagung des Abstreifers auf der konkaven, bezüglich der Montage im Zylinder 7 innenliegenden Seite der Verbindungsmembrane 20 ermöglicht, wobei durch die Druckbeaufschlagung die Funktion der Abstreiflippen 14 und 16 und die Funktion des statischen Dichtteils 18 zusätzlich verstärkt wird.

## Patentansprüche

1. Abstreifer, insbesondere für fluidbetriebene Zylinder-Kolben-Aggregate, zum Einbau in einen Innenraum, mit mindestens einer dynamischen Abstreifkante (24), die ein relativ zu ihr axial bewegtes Teil (9) berührt, und mit einer statischen Dichtfläche (36), die mit dem Grund (8.5) des Einbauraumes (8) in fluiddichten Kontakt tritt, wobei die Abstreifkante/n (24 und 26) an einem Abstreifteil (12) angeformt ist/sind und die statische Dichtfläche (36) an einem Dichtteil (18) ausgebildet ist sowie der Abstreif- und der Dichtteil (12 bzw. 18) mittels eines an diese beiden Teile (12 und 18) angeformten Verbindungsteiles (20) mit relativ geringer Radialsteifigkeit radial beweglich miteinander verbunden sind, welcher (20) eine wesentlich geringere Biegesteifigkeit aufweist als der Abstreif- und der Dichtteil (12 bzw. 18), dadurch **gekennzeichnet**, daß sein membranartiges Verbindungsteil (20) innen und außen je ein durchgehend gleichsinnig gewölbtes Profil aufweist und vor Einbau unter höchstens 15° zur Symmetrieachse (axiale Bewegungsrichtung) in den Abstreifteil 12 und in ungefähr gleicher Richtung unter einem Winkel zwischen +15° und -15° in den Dichtteil (18) mündet, wobei seine von einem Druckgradienten beaufschlagbare Inenfläche im Profil konkav ist und seine im Profil konvexe Außenfläche nach Einbau eine axial vordere Stirnfläche (8.4) des Einbauraumes (8) tangiert.

2. Abstreifer nach Anspruch 1, dadurch gekennzeichnet, daß das eine Wandstärke von mindestens 0,2 mm aufweisende Verbindungsteil (20) aus wenigstens zwei Kreisringsegmenten mit verschiedenen Radien und/oder Wandstärken gebildet ist.

3. Abstreifer nach Anspruch 1 oder 2, dadurch gekennzeichnet, daß der Verbindungsteil (20) auf der druckabgewandten Seite des Abstreifteiles (12) unter Bildung einer Aussparung (22) in einen Kern (23) desselben radial außen einmündet.

4. Abstreifer nach einem der Ansprüche 1 bis 3, dadurch gekennzeichnet, daß der Verbindungsteil (20) auf der druckabgewandten Seite des Abstreifteiles (12) in den Dichtteil (18) radial innen einmündet.

5. Abstreifer nach einem der Ansprüche 1 bis 4, dessen Abstreifteil (12) eine in Bewegungsrichtung vorspringende Abstreiflippe (14) mit der Abstreifkante (24) aufweist, dadurch **gekennzeichnet**, daß in gleicher Richtung eine am Abstreifteil (12) ausgeformte Hilfsdichtkante (30) vorspringt, die mit der axial vorderen Stirnfläche (8.4) des Einbauraumes (8) in Kontakt tritt; und daß sich der Abstreifteil (12) an seinem der Hilfsdichtkante (30) axial abgewandten Ende unter axialer Verpressung an der axial hinteren Stirnfläche (8.3) des Einbauraumes (8) abstützt.

6. Abstreifer nach einem der Ansprüche 1 bis 5, dessen Abstreifteil (12) eine in entgegengesetzter Richtung vorspringende zweite Abstreiflippe (16) mit einer zweiten Abstreifkante (26) aufweist, dadurch **gekennzeichnet**, daß an der zweiten Abstreiflippe (16) mehrere radiale, axial vorspringende Stützwülste (28) ausgebildet sind, die mit der axial hinteren Stirnfläche (8.3) des Einbauraumes (8) in Kontakt treten, welcher die konkave Außenfläche des Verbindungsteiles (20) zugewandt ist.

7. Abstreifer nach den Ansprüchen 5 und 6, dadurch gekennzeichnet, daß die umlaufende zweite Abstreiflippe (16) bis zu 25% dicker ist als die umlaufende erste Abstreiflippe (14) und einen bis zu 5% kleineren Innendurchmesser hat, gemessen an den Abstreifkanten (26 bzw. 24).

8. Abstreifer nach einem der Ansprüche 1 bis 7, dadurch gekennzeichnet, daß die radiale Dicke des Dichtteiles (18) in Richtung des Druckgefälles mit einem Keilwinkel von 5° bis 30° abnimmt und die Dichtfläche (36) des ausgebauten Dichtteils (18) mit der Symmetrieachse einen Winkel von höchstens 40° bildet.

9. Abstreifer nach einem der Ansprüche 1 bis 8, dadurch gekennzeichnet, daß der Dichtteil (18) an seinen beiden axialen Enden je eine statische Dichtkante (34) aufweist, welche die statische Dichtfläche (36) begrenzen.

## Claims

1. Wiper, especially for fluid-operated piston-cylinder units, for installation in a cavity, with at least one dynamic wiper edge (24), which contacts a part (9) axially moved relative thereto, and with a static sealing surface (36), which enters into fluidtight contact with the base (8.5) of the installation space (8), wherein the wiper edge or edges (24 and 26) is or are shaped on at a wiping part (12) and the static sealing surface (36) is formed at a sealing part (18) as well as the wiping part and the sealing part (12 and 18 respectively) are radially movably connected together by means of a connecting part (20), which is shaped on at these two parts (12 and 18), with relatively low radial stiffness, which part (20) has a substantially lower bending stiffness than the wiping part and the sealing part (12 and 18 respectively), characterised thereby that its membrane-like connecting part (20) has at each of the inside and the outside a respective profile continuously curved in like sense and prior to installation communicates with the wiping part (12) at maximally 15° to the axis of symmetry (axial movement direction) and with the sealing part (18) in approximately the same direction at an angle of between +15° and -15°, wherein its inner surface loadable by a pressure gradient is concave in profile and its outer surface, which is convex in profile, after installation touches an axially forward end surface 8.4) of the installation space (8).

2. Wiper according to claim 1, characterised thereby that the connecting part (20), which has a wall thickness of at least 0.2 millimetres, is formed from two circular ring segments of different radii and/or wall thicknesses.

3. Wiper according to claim 1 or 2, characterised thereby that the connecting part (20) at the side, which is remote from pressure, of the wiping part (12) communicates radially outwardly with a core (23) thereof whilst forming a recess (22).

4. Wiper according to one of claims 1 to 3, characterised thereby that the connecting part (20) at the side, which is remote from pressure, of the wiping part (12) communicates radially with the sealing part (18).

5. Wiper according to one of claims 1 to 4, the wiping part (12) of which has a wiper lip (14), which projects in movement direction, with the wiper edge (24), characterised thereby that an auxiliary sealing edge (30), which is shaped on at the wiping part (12) and enters into contact with the axially forward end surface (8.4) of the installation space (8), projects in the same direction and that the wiping part (12) is supported, at its end remote from the auxiliary sealing edge (30), under axial pressing against the axially rearward end surface (8.3) of the installation space (8).

6. Wiper according to one of claims 1 to 5, the wiping part (12) of which has a second wiper lip (16), which projects in opposite direction, with a second wiper edge (26), characterised thereby that formed at the second wiper lip (16) are several radial, axially projecting support beads (28), which enter into contact with the axially rearward end surface (8.3), which faces the concave outer surface of the connecting part (20), of the installation space (8).

7. Wiper according to claims 5 and 6, characterised thereby that the encircling second wiper lip (16) is up to 25 percent thicker than the encircling first wiper lip (14) and has an up to 5 percent smaller internal diameter measured at the wiper edges (26 and 24).

8. Wiper according to one of claims 1 to 7, characterised thereby that the radial thickness of the sealing part (18) decreases in the direction of pressure drop by a wedge angle of 5° to 30° and the sealing surface (36) of the demounted sealing part (18) forms an angle of at most 40° with the axis of symmetry.

9. Wiper according to one of claims 1 to 8, characterised thereby that the sealing part (18) has at each of its two axial ends a respective static sealing edge (34) which bounds the static sealing surface (36).

## Revendications

1. Racleur, en particulier pour des ensembles piston-cylindre actionnés par un fluide, à monter dans un logement intérieur, comprenant au moins une arête dynamique de raclage (24), qui vient en contact avec une pièce (9) mobile axialement par rapport à elle, et une surface d'étanchéité (36) statique, qui vient en contact avec le fond (8.5) du logement de montage (8), en assurant l'étanchéité du fluide, l'arête ou les arêtes de raclage (24 et 26) étant formé(s) sur une pièce de raclage (12) et la face statique d'étanchéité (36) étant constituée sur une pièce d'étanchéité (18) et la pièce de raclage et la pièce d'étanchéité ( 12 ou 18) étant reliées l'une à l'autre de façon mobile radialement au moyen d'une pièce de liaison (20), présentant une rigidité radiale relativement faible, formée sur ces deux pièces (12 et 18), pièce de liaison (20) qui présente une résistance à la flexion sensiblement plus faible que la pièce de raclage et la pièce d'étanchéité (12 ou 18),
caractérisé en ce que
sa pièce de liaison ( 20) en forme de membrane présente à l'intérieur et à l'extérieur respectivement un profil bombé de même sens d'un bout à l'autre et débouche avant le montage dans la pièce de raclage (12) sous un angle d'au plus 15° par rapport à l'axe de symétrie (la direction axiale du mouvement) et dans environ la même direction sous un angle compris entre +15° et -15° dans la pièce d'étanchéité (18), sa face intérieure, qui peut être sollicitée par un gradient de pression, ayant un profil concave, et sa face extérieure au profil convexe étant tangente après montage à une face frontale (8.4) du logement de montage (8) axialement antérieure.

2. Racleur selon la revendication 1,
caractérisé en ce que la pièce de liaison (20), qui présente une épaisseur de paroi d'au moins 0,2 mm est constituée par au moins deux arcs de cercles de rayons et/ou d'épaisseurs de paroi différents.

3. Racleur selon la revendication 1 ou 2,
caractérisé en ce que
la pièce de liaison (20) débouche radialement à l'extérieur sur la face de la pièce de raclage (12), située à l'opposé de la paroi, en formant un renfoncement (22) dans un noyau (23) de celle-ci.

4. Racleur selon l'une des revendications 1 à 3,
caractérisé en ce que
la pièce de liaison (20) débouche radialement à l'intérieur sur la face de la pièce de raclage (12) , située à l'opposé de la pression, dans la pièce d'étanchéité (18).

5. Racleur selon l'une des revendications 1 à 4, dont la pièce de raclage (12) présente une lèvre de raclage (14), qui fait saillie dans le sens du mouvement, avec l'arête de raclage (24),
caractérisé en ce que
une arête auxiliaire d'étanchéité (30), formée sur la pièce de raclage (12), fait saillie dans le même sens, arête qui vient en contact avec la face frontale (8.4) axialement antérieure du logement de montage (8),
la pièce de raclage (12) prend appui à son extrémité, située axialement à l'opposé de l'arête auxiliaire d'étanchéité (30), sous l'effet d'une pression axiale sur la face frontale axialement postérieure (8.3) du logement de montage (8).

6. Racleur selon l'une des revendications 1 à 5, dont la pièce de raclage (12) présente une deuxième lèvre de raclage (16), qui fait saillie dans le sens opposé, avec une deuxième arête de raclage (26),
caractérisé en ce que
plusieurs bourrelets d'appui (28) radiaux, qui font saillie axialement, sont constitués sur la seconde lèvre de raclage (16), bourrelets d'appui (28) qui viennent en contact avec la face frontale axialement postérieure (8.3) du logement de montage (8) qui est tourné vers la face concave extérieure de la pièce de liaison (20).

7. Racleur selon les revendications 5 et 6,
caractérisé en ce que
la deuxième lèvre de raclage (16), qui fait tout le tour, est jusqu'à 25 % plus épaisse que la première lèvre de raclage (14) qui fait tout le tour, et a un diamètre intérieur plus petit jusqu'à 5 % , en le mesurant sur les arêtes de raclage (26 ou 24).

8. Racleur selon l'une des revendications 1 à 7,
caractérisé en ce que
l'épaisseur radiale de la pièce d'étanchéité (18) décroît dans le sens de la chute de pression avec un angle de bord d'attaque de 5° à 30° et la surface d'étanchéité (36) de la pièce d'étanchéité (18) démontée forme avec l'axe de symétrie un angle d'au plus 40°.

9. Racleur selon l'une des revendications 1 à 8,
caractérisé en ce que
la pièce d'étanchéité (18) à ses deux extrémités axiales présente respectivement une arête statique d'étanchéité (34) qui délimite la surface statique d'étanchéité (36).
